# EUROPEAN PATENT SPECIFICATION

(11) **EP 4 461 552 B1**
(45) Date of publication and mention of the grant of the patent: **10.12.2025**
(21) Application number: 24174789.8
(22) Date of filing: 08.05.2024
(51) Int. Cl.: B42C 5/04, B23C 5/08, B23C 3/34, B26D 3/06

(54) **NOTCHING DEVICE FOR BINDING MACHINES**
EINKERBVORRICHTUNG FÜR BUCHBINDEMASCHINEN
DISPOSITIF D'ENCOCHAGE POUR MACHINES À RELIER

(30) Priority: 08.05.2023 IT 202300009096
(43) Date of publication of application: 13.11.2024
(73) Proprietor: K.G.S. Srl Unipersonale, 35035 Mestrino (PD) (IT)
(72) Inventor: RACCANELLO, Roberto, 35125 Padova (IT)
(74) Representative: Maroscia, Antonio

(56) References cited:
- EP-A2- 2 537 614
- US-A1- 2008 206 007

## Description

### Field of the invention

**The** present invention generally finds application in the technical field of bookbinding, and it particularly relates to a notching device for bookbinding machines.

### Background art

The use of devices for machining the back of blocks of sheets to be bound before applying one or more layers of glue or adhesive for gluing a cover thereon has been long known in the printing and bookbinding industry.

Typically, these devices comprise a plate defining a main axis and having an upper face facing the back of the of the block to be cut and a lower face coupled with an electro-spindle of a binding machine, which machine comprises a plane for supporting the back of the blocks during advancement thereof.

On the upper face of the plate there are applied a first type of machining tools, configured to carry out the milling of the sheets of the block and a second type of machining tools which make the notches on the back of the block, also called engraving or notching devices.

The milling of the block of sheets using a milling tool is carried out so as to level the surface of the back to remove part of the excess paper from the back and prepare the latter for the subsequent notching machining carried out by the notching tool.

The engraving of the block of sheets is carried out to obtain several notches and engravings along the back of the book so as to allow the adhesive, usually based on EVA and/or PO, to penetrate in-depth on the back of the blocks of sheets so as to increase the contact surface area between the pages and the adhesive agent and obtain a "gripper" effect for increasing the resistance of the pages to tear.

With this process, the back of the block of sheets is machined by engraving the surface of the back, so as to increase the contact surface of the block of sheets with the adhesive to be applied subsequently.

Furthermore, between the engraving step and the cover gluing step, the block of sheets is subjected to a brushing step to remove traces of dust or tiny chips present on the back of the book.

Of course, all the steps described above are not exhaustive given that there may also be provided further machining steps in high production binding machines.

Drawbacks relating to the geometry of engraving tools are also known. As a matter of fact, such tools must have a front face, or chest, that is inclined with respect to the engraving direction to facilitate the entry of the engraving tool into the back of the block of sheets.

However, given that the front face is inclined towards the upper surface of the plate, the tool tends to tear the paper with the resulting presence of excess material which protrudes from the back of the block of sheets.

As known, the presence of torn paper on the back generates a plurality of drawbacks, such as the incomplete penetration of the adhesive on the engraved back, the insufficient amount of adhesive adapted to ensure an appropriate sealing of the sheets and the presence of torn paper and embedded in the glue with resulting generation of corrugations on the cover which covers the back of the block.

Document EP1533131 discloses an apparatus for the notching of the back of blocks of sheets which comprises clamps for moving the blocks towards a disc driven in rotation by a motor provided with a group of cutting tools adapted to provide furrows along the back of blocks of sheets.

Each group of tools comprises interchangeable knives arranged in a propeller-like fashion along the surface of the disc to generate cutting lines staggered with respect to each other and wherein the height of each single knife can be adjusted independently from the others.

Document DE 2719402 discloses an apparatus for the notching of blocks of sheets comprising a rotary disc on which there is fixed a plurality of knives having a hollow tip.

While the block of sheets advances toward the rotary disc, the knives continuously remove a chip with a serrated cutting surface. The teeth have a predetermined cutting depth and height and adapted to facilitate the full removal of the chip.

However, the sharp profile of the tools described in such prior art solutions is not conformed to avoid the tearing of the paper with resulting presence of excess material which protrudes from the back of the block of sheets.

US 2008/206007 A1 discloses the preamble of claim 1.

Therefore, there is a need to study a notching tool adapted to at least partially overcome the drawbacks described above.

### Technical problem

In the light of the prior art the technical problem addressed by the present invention is to provide a notching device provided with at least one engraving tool provided with a cutting edge adapted to obtain notches on the back of the block of sheets and it is able to remove the torn paper during the engraving.

### Summary of the invention

The object of the present invention is to solve the aforementioned problem by providing a notching device for binding machines of the type indicated above which is highly effective and cost-effective.

A particular object of the present invention is to provide a notching device for binding machines of the type indicated above which allows to obtain notching machining operations while removing any torn paper from the back of the block.

Another object of the present invention is to provide a notching device for binding machines of the type indicated above which allows to increase the surface area of the back of the block available for applying an adhesive.

A further object of the present invention is to provide a notching device for binding machines of the type indicated above which has a rigid and durable cutting edge.

The objects mentioned above and others which will be more apparent hereinafter are achieved by a notching device for binding machines, according to claim 1, suitable for automatically creating on the back of blocks of sheets a plurality of notches intended to collect an adhesive for gluing a cover.

The notching device comprises a plate defining a main axis and having an upper face facing the back and one or more engraving tools which can be anchored to the upper face to make notches on the back by rotating the plate.

Each tool comprises a body with an end provided with a cutting edge which comprises a first cutting portion having a shape complementary to the notch to be made and second cutting portions adjacent to and placed on the sides of the first portion to trim the back and remove the excess material generated by the first portion, wherein the second cutting portions are substantially aligned and parallel to the upper face.

Thanks to this combination of features, the notching device allows to make notches on the back of the block of sheets removing any torn paper during the engraving.

Advantageous embodiments of the invention are attained according to the dependent claims.

### Brief description of the drawings

Further features and advantages of the invention will be more apparent in the light of the detailed description of a preferred but not exclusive embodiment of a notching device for binding machines of the type mentioned above, presented by way of non-limiting example with reference to the drawings below, wherein:
**FIG. 1** is a perspective view of a binding machine on which there is fitted the notching device according to the invention;
**FIG. 2** is a perspective view of a detail of the machine of Fig. 1 provided with the notching device according to the invention;
**FIGS. 3-5** are respectively a top and lateral perspective view of the notching device of Fig. 2;
**FIGS. 6A** and **6B** are respectively a bottom view and an enlarged lateral view of the back of a block of sheets machined by the notching device of Fig. 2;
**FIGS. 7-10** are respectively a perspective, lateral, top and front view of an engraving tool which can be anchored to the device of Fig. 2.

### Detailed description of a preferred embodiment

With particular reference to the figures, there is shown a notching device, indicated in its entirety with reference numeral **1,** designed to be installed on a binding machine **2.**

The notching device **1** is configured for automatically creating on the back **D** of blocks **B** of sheets **S** to be bound a plurality of notches **T** intended to collect an adhesive for gluing a cover on the back **D.**

In a per se known manner, the notches **T** are aimed at increasing the surface of the back **D** for the subsequent application of the adhesive.

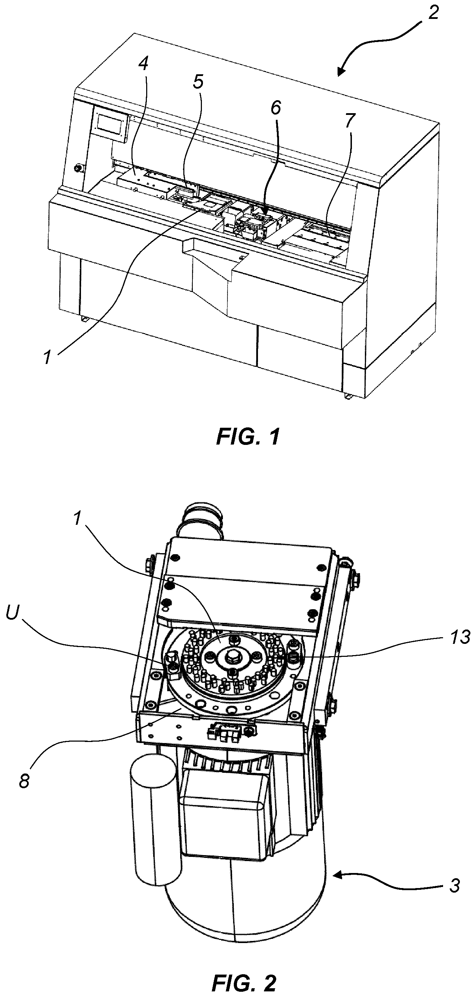

The binding machine **2** comprises a support plane **P** of the back **D** of the blocks **B** which move in a substantially horizontal direction **H** and an electro-spindle **3** on which there is fitted the notching device **1,** as better shown in **FIGS. 1** and **2****.**

Suitably, the block **B** is placed on the support plane **P** and advanced along the machine **2** by means of motor-driven clamp **4** having a pair of plates **5** adapted to retain the block **B** at its side walls.

In a per se known manner, the clamp **4** may move along the direction **H** along the machine **2** firstly passing through an area for machining the back **D** of the block **B,** by means of the notching device **1,** subsequently a gluing area **6** for applying adhesive or glue to the back **D** and lastly a finishing area **7** for applying a cover to the block **B.**

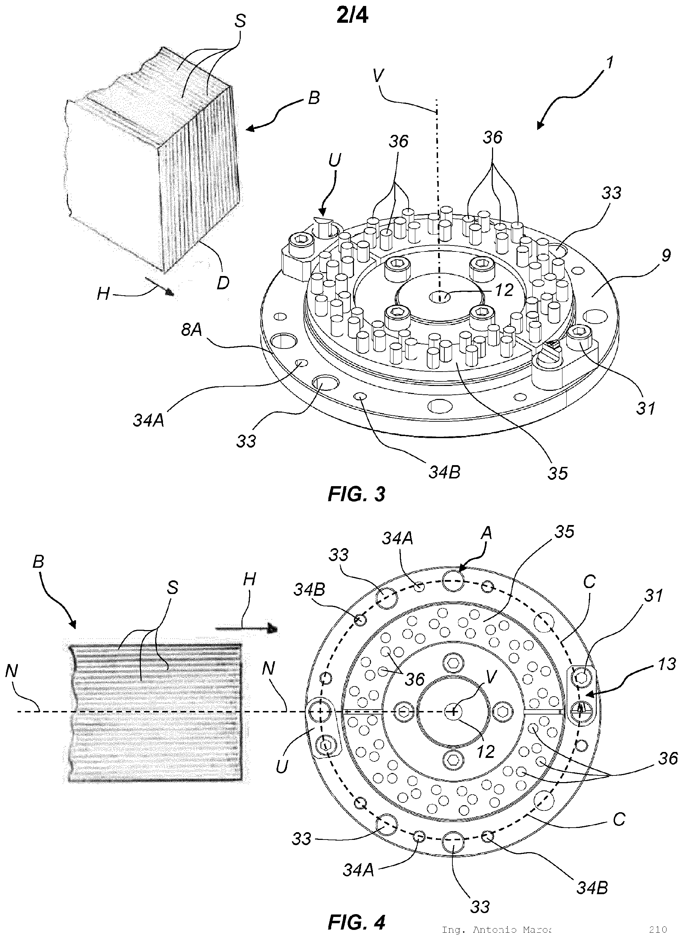

With reference to **FIGS. 3-5****,** in the preferred embodiment of the invention, the notching device **1** comprises a plate **8** defining a main axis **V** and having an upper face **9** facing the back **D** of the block **B** to be engraved.

Furthermore, the plate **8** comprises a lower face **10** which can be coupled to the electro-spindle **3** by means of a body or tang **11.**

As better shown in the figures, the upper face **9** of the plate **8** is arranged at a first distance **L₁** from the support plane **P** by a predetermined value.

Preferably, for an optimal machining of the back **D,** the median line **N** of the block **B** of sheets being machined intersects the main axis **V** of the plate **8,** as better shown in **FIG. 4****.**

In one embodiment, the plate **8** is disc-shaped and it has a circular outer peripheral edge **8A** and a central hole **12** for inserting the drive shaft of the electro-spindle **3.**

However, the plate **8** may have different shapes from the disc-shaped ones, without departing from the scope of protection of the present invention.

Furthermore, the electro-spindle **3** is configured to drive at a constant and adjustable velocity the plate **8** in rotation around the main axis **V** and in a selectively clockwise or counterclockwise direction.

On the upper face **9** of the plate **8** there can be anchored in special centring points **A** one or more engraving tools **13** adapted to make notches **T** on the back **D** of a block **B** by rotating the plate **8.**

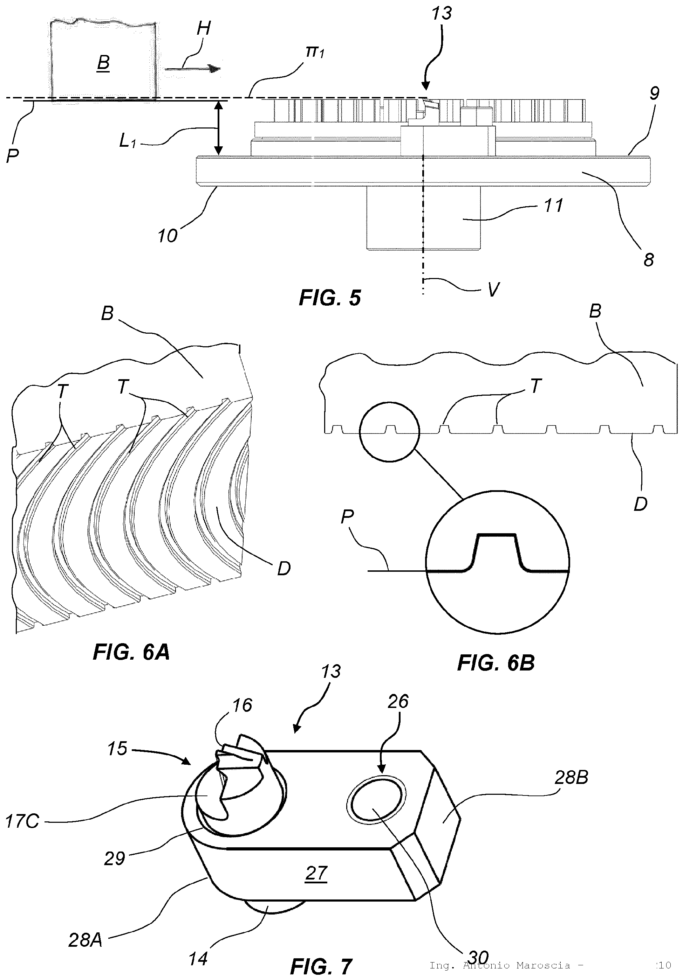

With particular reference to **FIGS. 7-10****,** each engraving tool **13** comprises a body **14** having an end **15** provided with a cutting edge **16.**

In one embodiment, the tool **13** has a substantially cylindrical body **14** having a secondary axis **W** substantially parallel to the main axis **V** of the plate **8.**

The body **14** of the tool **13** has a recess **17** adapted to move the material cut from the back **D** away from the block **B.**

The recess **17** has an upper portion **17A** proximal to the cutting edge **16** having a substantially inclined surface with respect to the upper face **9** of the plate **8.**

In one embodiment, the upper portion **17A** is inclined by a first angle **γ**, defined as upper clearance angle or chest angle, comprised between 60° and 80° with respect to the upper face **9,** preferably equal to about 70°.

Furthermore, the recess **17** has a central portion **17B** having a surface substantially parallel to the secondary axis **W** and orthogonal to the upper face **9** and a lower portion **17C** having a surface substantially parallel to the upper face **9** of the plate **8.**

In an alternative embodiment of the engraving tool **13,** not shown in the figures, the upper portion **17A** may be concave or convex and not flat, the central portion **17B** may be inclined and not parallel to the secondary axis **W** and the lower portion **17C** may be curved or inclined with respect to the upper face **9,** without departing from the scope of protection of the present invention.

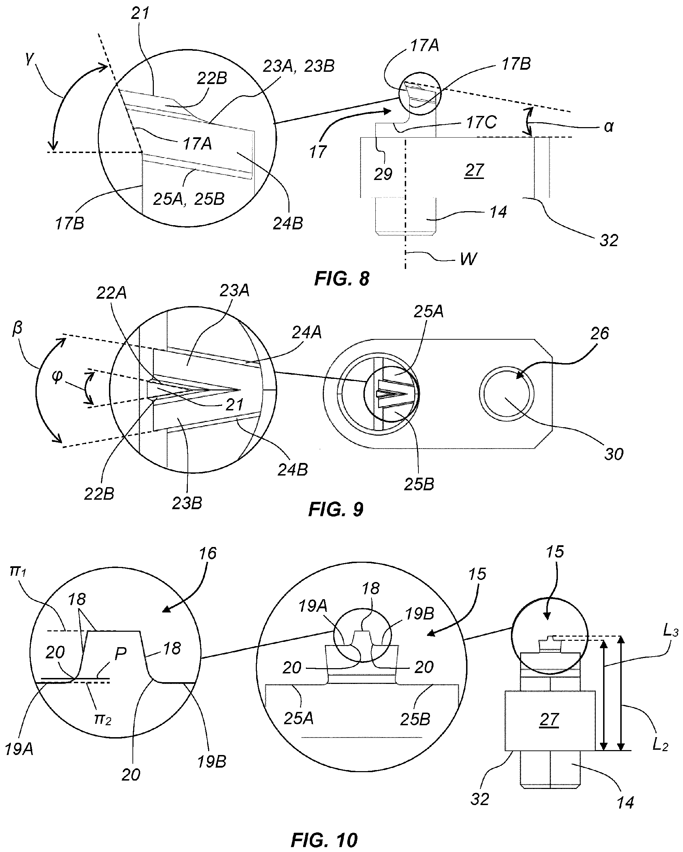

Advantageously, the cutting edge **16** comprises a first cutting portion **18** having a shape complementary to the notch **T** to be made and second cutting portions **19A, 19B** adjacent to and placed on the sides of the first cutting portion **18** to trim and remove the excess material generated by the first portion **18,** as better shown in **FIGS. 6** and **10****.**

The first cutting portion **18** may be substantially rectangular, trapezoidal, triangular, semicircular-shaped or other similar shape adapted to create a notch **T** on the back **D.**

Preferably, the second cutting portions **19A, 19B** are substantially aligned and parallel to the upper face **9** of the plate **8.**

Furthermore, the second cutting portions **19A, 19B** are joined to the first cutting portion **18** by means of a circular arc-shaped connection **20** and with predetermined radius.

In one embodiment, the first cutting portion **18** is arranged at a second distance **L₂** from the upper face **9** by a value greater than the predetermined value of the first distance **L₁**.

Furthermore, the second portions **19A, 19B** are arranged at a third distance **L₃** from the upper face **9** by a value smaller than the predetermined value of the first distance **L₁**, as better schematised in **FIG. 10****.**

Therefore, the difference between the first distance **L₁** and the third distance **L₃** will be smaller than the value of the predetermined radius of the connection **20** so as to allow the trimming of the machining on the paper carried out by the first cutting portion **18.**

In other words, the first cutting portion **18** of the cutting edge **16** defines an engraving plane **π₁** arranged above the support plane **P** and the second cutting portions **19A, 19B** define a finishing plane **π₂** arranged below the support plane **P.**

In **FIGS. 6A** and **6B** there is schematised the notching machining carried out on the back **D** of a block **B** of sheets **S** by the cutting edge **16** described above.

It is apparent that the cutting edge **16** of the engraving tool **13** of the notching device **1** according to the invention allows to:
- provide notches **T** on the back **D** by means of a first cutting portion **18;**
- trim the back **D** by means of the circular arc-shaped connection **20;**
- remove the paper torn by the first cutting portion **18** from the back **D** by means of second cutting portions **19A, 19B.**

As better shown in **FIGS. 8** and **9,** the end **15** of the body **14** has a first upper surface **21** and a pair of first lateral surfaces **22A, 22B** that are substantially flat and at least partially sharp which extend from the first cutting portion **18.**

Furthermore, the end **15** of the body **14** has a pair of second upper surfaces **23A, 23B** that are substantially flat and at least partially sharp which extend from the second cutting portions **19A, 19B.**

The second upper surfaces **23A, 23B** are substantially parallel to the first upper surface **21** and substantially inclined with respect to the upper face **9** of the plate **8.**

In one embodiment, the first upper surface **21** and the second upper surfaces **23A, 23B** are inclined by a second angle **α,** also called first discharge angle, comprised between 5° and 15° with respect to the upper face **9** or to the lower portion **17C,** preferably equal to about 10°.

As better shown in **FIGS. 8** and 9 the first upper surface **21** has a triangular shape in plan view and the pair of first lateral surfaces **22A, 22B** are inclined with respect to each other by a third angle **φ,** also called second discharge angle comprised between 15° and 25°, preferably equal to 20°.

Below the second upper surfaces **23A, 23B,** the end **15** of the body **14** has a pair of second substantially flat lateral surfaces **24A, 24B** which extend towards the upper surface **9** of the plate **8.**

As better shown in **FIGS. 8** and **9** the second lateral surfaces **24A, 24B** are inclined with respect to each other by a fourth angle **β,** also called third discharge angle, comprised between 15° and 25°, preferably equal to 20°.

The second lateral surfaces **24A, 24B** are respectively connected to a third substantially flat upper surface **25A, 25B,** substantially parallel to the upper surface **21** and substantially inclined with respect to the upper surface **9** of the plate **8,** as schematised in **FIG. 8.**

There are provided removable anchoring means **26** for removably anchoring the body **14** of the engraving tool **13** to the plate 8 so as to selectively direct the cutting portions **18, 19A, 19B** towards the one or the other rotation direction of the plat **8.**

In one embodiment, the anchoring means **26** of each tool **13** comprise an elongate plate **27** having at a first longitudinal end **28A** a first through hole **29** for forcibly inserting the cylindrical body **14** of the tool **13.**

Furthermore, at a second longitudinal end **28B** of the elongate plate **27** there is a second through hole **30** for the through-passing of a pin or bolt **31** for removably anchoring the elongate plate **27** to the plate **8.**

As better shown in **FIGS. 7** to **10****,** the elongate plate **27** has a flat lower surface **32** which can be placed on the upper face 9 of the plate **8.**

As better shown in **FIGG. 3-4,** on the plate 8 there will be provided a first group of smooth through holes 33 into which there may be inserted the cylindrical body **14** of each engraving tool **13** and a second group of pairs of threaded through holes **34A, 34B** which can be aligned with the through hole **30** of the elongate plate **27** and into which there may be screwed the stop pin or bolt **31** for locking the elongate plate **27** and therefore the engraving tool **13** in position.

Suitably, all the holes **33, 34A, 34B** are arranged along a circumference **C** that is concentric with the main axis **V.**

The anchoring means **26** may therefore be releases or locked by simply unscrewing and screwing the stop bolts **31,** and therefore this may allow not only to lock the position of the engraving tool **13** in a centring point **A,** but also direct the cutting edge **16** towards the clockwise or counter-clockwise rotation direction of the electro-spindle **3.**

In this manner, the engraving tool **13** may be used both in binding machines **2** in which the block **B** moves from left to right with respect to the spindle **3** with the plate **8** rotating around the main axis **V** in a clockwise rotation direction, and in machines **2** in which the block **B** moves from right to left with respect to the spindle **3** with the plate **8** rotating around the axis **V** in a counter-clockwise direction.

In one embodiment, not depicted in the drawings, on the plate **8** there may be anchored not only the engraving tools **13** of the milling device **1,** but also other types of tools for machining the back **D** such as for example milling tools **U.**

In this manner, advancing along the plane **P** of the binding machine **2,** the block **B** will firstly interact with the milling tools **U,** not subject of the present invention, and subsequently with the engraving tools **13.**

In a per se known manner, the plate **8** may comprise an inner annular portion **35** provided with a plurality of brushes **36** facing towards the back **D** of the block **B** and protruding with respect to the support plane **P** and adapted to remove any machining residues of the engraving tool **13** or milling tool **U** from the back **D** of the blocks **B.**

Furthermore, there is provided a binding machine **2,** schematically shown in **FIG. 1****,** for machining the back **D** of blocks **B** of sheets **S** to be bound.

The machine **2** according to the invention comprising a plane **P** for supporting the back **D** of the blocks **B** along a substantially horizontal direction **H,** a station for loading blocks **B** with the back **D** placed on the advancement plane **P,** not shown in the figures, an electro-spindle **3** with main rotation axis **V** on which there is fitted a notching device **1,** of the type described above and guide means adapted to guide the blocks **B** towards the notching device **1.**

Advantageously, the device **1** comprises one or more engraving tools **13** for engraving the back **D** of the blocks **B** of the type described above, the tool **13** having, in its essential form, a cylindrical body **14** and a cutting edge **16** with a first cutting portion **18** having a shape complementary to the notch **T** to be made and second cutting portions **19A, 19B** that are adjacent to and placed on the sides of the first cutting portion **18** to trim the back and remove the excess material.

The notching device **1** according to the invention is susceptible to numerous modifications and variants all falling within the inventive concept outlined in the attached claims.

Although the device been described with particular reference to the attached figures, the reference numerals used in the description and in the claims are meant for improving the intelligibility of the invention and do not limit the claimed scope of protection in any manner whatsoever.

Throughout the description, reference to "one embodiment" or "the embodiment" or "some embodiments" indicate that a particular feature, structure or element described is comprised in at least one embodiment object of the present invention.

### Industrial applicability

The present invention can be industrially applied because it can be manufactured on industrial scale by industries belonging to the publishing and bookbinding industry.

## Claims

1. A notching device (**1**) for binding machines (**2**), suitable for automatically forming on the back (**D**) of blocks (**B**) of sheets (**S**) a plurality of notches (**T**) intended to collect an adhesive for gluing a cover, which notching device (**1**) comprises:
- a plate (**8**) defining a main axis (**V**) and having an upper face (**9**) facing the back (**D**) to be engraved;
- one or more engraving tools (**13**) which can be anchored to said upper face (**9**) to make notches (**T**) on the back (**D**) by rotating said plate (**8**), each tool (**13**) comprising a body (**14**) with an end (**15**) provided with a cutting edge (**16**);
wherein said cutting edge (**16**) comprises a first cutting portion (**18**) having a shape complementary to the notch (**T**) to be made and second cutting portions **(19A, 19B)** adjacent to and placed on the sides of said first portion (**18**) to trim the back (**D**) and remove the excess material generated by said first portion (**18**), said second cutting portions (**19A, 19B**) being substantially aligned and parallel to said upper face (**9**);
wherein said end (**15**) has a first upper surface (**21**) and a pair of first lateral surfaces (**22A, 22B**) which extend from said first cutting portion (**18**) and a pair of second upper surfaces (**23A, 23B**) which extend from said second cutting portions (**19A, 19B**);
wherein said surfaces (**21; 22A, 22B; 23A, 23B**) are substantially flat and at least partially sharp, **characterised in that** said second upper surfaces (**23A, 23B**) are substantially inclined with respect to said upper face (**9**).

2. Device as claimed in claim 1, wherein said second upper surfaces (**23A, 23B**) are substantially parallel to said first upper surface (**21**).

3. Device as claimed in claim 1, wherein said first cutting portion (**18**) has a substantially rectangular, trapezoidal, triangular, semi-circular or other similar shape.

4. Device as claimed in claim 1, wherein said second cutting portions (**19A, 19B**) are joined to said first cutting portion (**18**) by means of a circular arc-shaped connection (**20**) with predetermined radius.

5. Device as claimed in claim 1, wherein said body (**14**) has a recess (**17**) adapted to convey the material cut from the back (**D**) towards said plate (**8**), said recess (**17**) having an upper portion (**17A**) proximal to said cutting edge (**16**) having a substantially inclined surface with respect to said upper face (**9**).

6. Device as claimed in claim 1, wherein removable anchoring means (**26**) are provided for removably anchoring said body (**14**) to said plate (**8**).

7. Device as claimed in claim 6, wherein said anchoring means (**26**) comprise an elongate plate (**27**) having at a first longitudinal end (**28A**) a first hole (**29**) for the forced insertion of said body (**14**).

8. Device as claimed in claim 7, wherein said elongate plate (**27**) comprises at the other longitudinal end (**28B**) thereof a second hole (**30**) for the passage of a pin or bolt (**31**) for removably anchoring to said plate (**8**).

## Patentansprüche

1. Eine Kerbvorrichtung (1) für Bindemaschinen (2), die dazu geeignet ist, auf der Rückseite (D) von Blöcken (B) aus Blättern (S) automatisch eine Vielzahl von Kerben (T) zu bilden, die dazu bestimmt sind, einen Klebstoff zum Kleben eines Deckblatts aufzunehmen, wobei die Kerbvorrichtung (1) umfasst:
- eine Platte (8), die eine Hauptachse (V) definiert und eine Oberseite (9) aufweist, die der zu gravierenden Rückseite (D) zugewandt ist;
- ein oder mehrere Gravurwerkzeuge (13), die an der oberen Fläche (9) verankert werden können, um durch Drehen der Platte (8) Kerben (T) auf der Rückseite (D) zu erzeugen, wobei jedes Werkzeug (13) einen Körper (14) mit einem Ende (15) umfasst, das mit einer Schneidkante (16) versehen ist;
wobei die Schneidkante (16) einen ersten Schneidabschnitt (18) mit einer zur herzustellenden Kerbe (T) komplementären Form und zweite Schneidabschnitte (19A, 19B) aufweist, die an den Seiten des ersten Abschnitts (18) angeordnet sind, um die Rückseite (D) zu trimmen und das durch den ersten Abschnitt (18) erzeugte überschüssige Material zu entfernen, wobei die zweiten Schneidabschnitte (19A, 19B) im Wesentlichen auf die Oberseite (9) ausgerichtet und parallel zu dieser sind;
wobei das Ende (15) eine erste Oberseite (21) und ein Paar erster Seitenflächen (22A, 22B) aufweist, die sich von dem ersten Schneidabschnitt (18) erstrecken, sowie ein Paar zweiter Oberseiten (23A, 23B), die sich von den zweiten Schneidabschnitten (19A, 19B) erstrecken;
wobei die Flächen (21; 22A, 22B; 23A, 23B) im Wesentlichen flach und zumindest teilweise scharf sind,
**dadurch gekennzeichnet dass** die zweiten oberen Flächen (23A, 23B) im Wesentlichen in Bezug auf die obere Fläche (9) geneigt sind.

2. Vorrichtung nach Anspruch 1, wobei die zweiten oberen Flächen (23A, 23B) im Wesentlichen parallel zur ersten oberen Fläche (21) sind.

3. Vorrichtung nach Anspruch 1, wobei der erste Schneidabschnitt (18) eine im Wesentlichen rechteckige, trapezförmige, dreieckige, halbkreisförmige oder ähnliche Form hat.

4. Vorrichtung nach Anspruch 1, wobei die zweiten Schneidabschnitte (19A, 19B) mit dem ersten Schneidabschnitt (18) mittels einer kreisbogenförmigen Verbindung (20) mit vorbestimmtem Radius verbunden sind.

5. Vorrichtung nach Anspruch 1, wobei der Körper (14) eine Aussparung (17) aufweist, die dazu ausgelegt ist, das von der Rückseite (D) abgeschnittene Material in Richtung der Platte (8) zu befördern, wobei die Aussparung (17) einen oberen Abschnitt (17A) in der Nähe der Schneidkante (16) aufweist, der eine im Wesentlichen geneigte Fläche in Bezug auf die Oberseite (9) aufweist.

6. Vorrichtung nach Anspruch 1, wobei abnehmbare Verankerungsmittel (26) vorgesehen sind, um den Körper (14) lösbar an der Platte (8) zu verankern.

7. Vorrichtung nach Anspruch 6, wobei die Verankerungsmittel (26) eine längliche Platte (27) umfassen, die an einem ersten Längsende (28A) ein erstes Loch (29) zum zwangsweisen Einführen des Körpers (14) aufweist.

8. Vorrichtung nach Anspruch 7, wobei die längliche Platte (27) an ihrem anderen Längsende (28B) ein zweites Loch (30) für den Durchgang eines Stifts oder Bolzens (31) zur lösbaren Verankerung an der Platte (8) aufweist.

## Revendications

1. Dispositif d'encochage (1) pour machines à relier (2), adapté pour former automatiquement sur le dos (D) de blocs (B) de feuilles (S) une pluralité d'encoches (T) destinées à recueillir un adhésif pour coller une couverture, lequel dispositif d'encochage (1) comprend:
- une plaque (8) définissant un axe principal (V) et présentant une face supérieure (9) tournée vers le dos (D) à graver;
- un ou plusieurs outils de gravure (13) pouvant être fixés à ladite face supérieure (9) pour réaliser des encoches (T) sur le dos (D) en faisant tourner ladite plaque (8), chaque outil (13) comprenant un corps (14) avec une extrémité (15) pourvue d'un bord tranchant (16);
dans lequel ledit bord tranchant (16) comprend une première partie coupante (18) ayant une forme complémentaire à l'encoche (T) à réaliser et des secondes parties coupantes (19A, 19B) adjacentes et placées sur les côtés de ladite première partie (18) pour rogner le dos (D) et éliminer l'excès de matière généré par ladite première partie (18), lesdites secondes parties coupantes (19A, 19B) étant sensiblement alignées et parallèles à ladite face supérieure (9);
dans lequel ladite extrémité (15) présente une première surface supérieure (21) et une paire de premières surfaces latérales (22A, 22B) qui s'étendent à partir de ladite première partie de coupe (18) et une paire de secondes surfaces supérieures (23A, 23B) qui s'étendent à partir desdites secondes parties de coupe (19A, 19B);
dans lequel lesdites surfaces (21, 22A, 22B, 23A, 23B) sont sensiblement plates et au moins partiellement tranchantes,
**caractérisé en ce que** lesdites secondes surfaces supérieures (23A, 23B) sont sensiblement inclinées par rapport à ladite face supérieure (9).

2. Dispositif selon la revendication 1, dans lequel lesdites secondes surfaces supérieures (23A, 23B) sont sensiblement parallèles à ladite première surface supérieure (21).

3. Dispositif selon la revendication 1, dans lequel ladite première partie coupante (18) a une forme sensiblement rectangulaire, trapézoïdale, triangulaire, semi-circulaire ou autre forme similaire.

4. Dispositif selon la revendication 1, dans lequel lesdites secondes parties de coupe (19A, 19B) sont reliées à ladite première partie de coupe (18) au moyen d'une connexion en forme d'arc circulaire (20) avec un rayon prédéterminé.

5. Dispositif selon la revendication 1, dans lequel ledit corps (14) comporte un évidement (17) adapté pour transporter le matériau coupé depuis l'arrière (D) vers ladite plaque (8), ledit évidement (17) comportant une partie supérieure (17A) proche dudit bord de coupe (16) ayant une surface sensiblement inclinée par rapport à ladite face supérieure (9).

6. Dispositif selon la revendication 1, dans lequel des moyens d'ancrage amovibles (26) sont prévus pour ancrer de manière amovible ledit corps (14) à ladite plaque (8).

7. Dispositif selon la revendication 6, dans lequel lesdits moyens d'ancrage (26) comprennent une plaque allongée (27) comportant, à une première extrémité longitudinale (28A), un premier trou (29) pour l'insertion forcée dudit corps (14).

8. Dispositif selon la revendication 7, dans lequel ladite plaque allongée (27) comprend à son autre extrémité longitudinale (28B) un deuxième trou (30) pour le passage d'une goupille ou d'un boulon (31) pour l'ancrage amovible à ladite plaque (8).
